# EUROPÄISCHE PATENTSCHRIFT

(11) **EP 0 576 990 B1**
(45) Veröffentlichungstag und Bekanntmachung des Hinweises auf die Patenterteilung: **17.09.1997**
(21) Anmeldenummer: 93110039.0
(22) Anmeldetag: 23.06.1993
(51) Int. Cl.: D03D 47/12, F16D 11/00

(54) **Vorrichtung zum alternierenden Ein- und Ausschalten der Antriebe von wenigstens zwei Schusseintragvorrichtungen eines Webstuhls**
Device for alternately engaging and disengaging the drive of at least two weft inserting devices in a loom
Dispositif pour l'enclenchement et le déclenchement alternatif de l'entrâinement d'au moins deux dispositifs d'insertion de trame d'un métier à tisser

(30) Priorität: 23.06.1992 BE 9200587
(43) Veröffentlichungstag der Anmeldung: 05.01.1994
(73) Patentinhaber: N.V. Michel Van de Wiele, B-8510 Kortrijk (Marke) (BE)
(72) Erfinder: Dewispelaere, André, B-8510 Kortrijk-Marke (BE); Gheysen, Nico, B-8768 Sint-Eloois-Winkel (BE)
(74) Vertreter: Prechtel, Jörg, Dipl.-Phys. Dr.

(56) Entgegenhaltungen:
- EP-A- 0 362 433
- BE-A- 868 946
- FR-A- 1 555 432
- FR-A- 2 265 015
- FR-A- 2 620 741

## Beschreibung

Die Erfindung betrifft Webmaschinen, die mit wenigstens zwei Vorrichtungen versehen sind, mittels derer ein Schußfaden in das Fach von einer Seite zur anderen Seite eingetragen wird, wobei diese Vorrichtungen an der Webmaschine in unterschiedlicher Höhe angeordnet sind, so daß die Schußfäden in diesen verschiedenen Höhen gleichzeitig in übereinander ausgebildete Fächer eingetragen werden können. Dies ist bspw. bei Doppelpol-Webmaschinen (Doppelplüsch-, Doppelmokett-, Doppelteppich-Webmaschinen) der Fall, die mit zwei Vorrichtungen versehen sind, welche gleichzeitig jeweils einen Schußfaden in das Fach des Obergewebes und des Untergewebes eintragen können.

Die Erfindung betrifft insbesondere Webmaschinen, bei denen die vorstehend genannten Vorrichtung Greifervorrichtungen sind.

Im Fall bekannter Webmaschinen mit zwei oder mehr Greifervorrichtungen besteht jede Greifervorrichtung aus zwei sammenwirkenden Teilen, die zu beiden Seiten der Webmaschine angeordnet sind, wobei jede eine Antriebsvorrichtung mit einem auf der Antriebswelle angeordneten Antriebszahnrad und eine sich in der Breitenrichtung der Webmaschine erstreckende Greiferstange umfaßt, die durch das Antriebszahnrad derart angetrieben werden kann, daß sie sich mit einem Ende von der Seite der Webmaschine längs einer Führungsvorrichtung zur Mitte der Webmaschine und zurück bewegen kann, und wobei an dem Ende der Greiferstange ein Greifer befestigt ist.

Die beiden Teile einer Greifervorrichtung wirken derart miteinander zusammen, daß sich die Greifer (in dem Fach) in der Mitte der Webmaschine treffen. An diesem Punkt wird ein von einer Seite der Webmaschine durch einen Greifer (Gebergreifer) getragener Schußfaden von dem anderen Greifer (Nehmergreifer) übernommen, welcher dann diesen Schußfaden bei seiner Rückkehrbewegung zur anderen Seite der Webmaschine mitnimmt.

Beim Einzelspulen-Doppelpol-Weben wird ein Schuß alternierend in das Obergewebe und in das Untergewebe eingetragen.

Bei einem derartigen Webverfahren werden bekannte Einzelgreifer-Webmaschinen verwendet. Diese Webmaschinen sind mit einer einzigen Schußeintragsvorrichtung versehen, bspw. einer Greifervorrichtung des vorstehend beschriebenen Typs, die den Schußfaden in jedem Fall auf der gleichen Höhe einträgt. Diese Webmaschinen sind ferner mit Webrahmen versehen, welche die Grund- und Polkettfäden unter Bildung eines Fachs zur Höhe des Greifers hin ziehen. Bei diesem Webverfahren müssen die Kettfäden somit derart gezogen werden, daß das Fach zwischen oberhalb der Höhe des Greifers verlaufenden Kettfäden und unterhalb jener Höhe verlaufenden Kettfäden gebildet wird, wobei der Greifer auf fester Höhe angeordnet ist oder sich auf fester Höhe gemeinsam mit der Weblade bewegt. In der Anschlagstellung des Kamms müssen sich alle Grundkettfäden des Obergewebes in ihrer oberen Stellung befinden und alle Grundkettfäden des Untergewebes müssen sich in ihrer unteren Stellung befinden derart, daß diese Grundkettfäden eine ausreichend große Kraftkomponente zum Ziehen der Polfäden (bzw. Florfäden) entwickeln, um auf diese Weise eine ausreichend Polhöhe zwischen Untergewebe und Obergewebe zu erhalten.

Der Nachteil des Einzelspulen-Doppelpol-Webens mit einer derartigen Einzelgreifer-Webmaschine liegt in der Tatsache, daß die Grundkettfäden sich schnell bewegen müssen, um in ausreichend kurzer Zeit einen ausreichenden Hub zu erhalten. Insbesondere müssen die Grundkettfäden des Obergewebes in kurzer Zeit oder mit anderen Worten während einer kleinen Drehung der Hauptwelle der Webmaschine einen ziemlich großen Hub ausführen.

Die EP-A-0 362 433 beschreibt eine Vorrichtung, die eine mögliche Lösung des vorstehend genannten Nachteils ist.

Diese Vorrichtung umfaßt eine Schußeintragsvorrichtung, die sich vertikal nach oben und unten bewegt und derart angetrieben ist, daß sie Schußfäden aufeinanderfolgend in terschiedlichen Höhen einträgt. Dies ermöglicht es, ein Doppelpolgewebe mit einer einzigen Spule zu weben, indem sie die Grundkettfäden übereinander in zwei unterschiedlichen Höhen ein Fach bilden läßt, wie dies im Fall einer Doppelgreifer-Webmaschine üblich ist. Der Vorteil liegt darin, daß die Grundkettfäden einen geringeren Hub ausführen müssen und folglich die Grundkettrahmen mit viel geringerer Geschwindigkeit bewegt werden können, was große Vorteile im Hinblick auf Abnutzung und Energieverbrauch der Maschine hat.

Jedoch hat diese Vorrichtung auch große Nachteile.

Ein erster Nachteil liegt darin, daß beträchtliche Mittel erforderlich sind, um die Greifervorrichtung - die aus einem Antrieb, einer Greiferführung und einem Greifer an einer Greiferstange besteht - konstant auf- und abzubewegen, so daß dies eine zeit- und kostenintensive Lösung für den vorstehend genannten Nachteil einer Einzelgreifer-Webmaschine ist.

Ein zweiter Nachteil der vorstehend beschriebenen Vorrichtung liegt darin, daß die Vorrichtung zum Auf- und Abbewegen der Schußeintragsvorrichtung in hohem Maße verschleißanfällig ist.

Eine weitere bekannte Lösung des Problems ist, die zu webenden Gewebe mit einer einzigen Spule auf einer Doppelgreifer-Webmaschine zu weben. Eine derartige Webmaschine ist mit zwei übereinander angeordneten Greifervorrichtungen versehen, welche vorgesehen sind, um beim Doppelspulenweben gleichzeitig jeweils einen Schuß in das Oberfach und das Unterfach einzutragen.

Eine derartige Webmaschine mit einer zusätzlichen Vorrichtung zu versehen, welche alternierend bspw. nur der oberen Greifervorrichtung einen Schußfaden übergibt und in einem nachfolgenden Schlag nur der unteren Greifervorrichtung einen Schußfaden übergibt, bedeutet, daß diese Doppelgreifer-Webmaschine zum Weben mit einer einzigen Spule verwendet werden kann. Somit wird der Vorteil erhalten, daß die Grundkettfäden lediglich einen kleinen Hub auszuführen brauchen, daß folglich den Grundkettrahmen eine ausreichend lange Bewegungszeit zur Verfügung steht und daß somit die erforderlichen Bewegungsgeschwindigkeiten niedriger sein können.

Jedoch hat diese Vorrichtung auch einen Nachteil. Während jedes Schußzyklus (Schlag bzw. Pick) treiben die Antriebsvorrichtungen beider Schußeintragsvorrichtungen ihre jeweiligen Greifer zur Mitte der Webmaschine und in das Fach, so daß stets eine der Greifervorrichtungen unnötigerweise betrieben wird. Die zum Antreiben dieser Greifervorrichtung aufgewendete Energie hat daher überhaupt keine Nutzwirkung und ist somit vollständig verloren.

Aus der Druckschrift FR-A-2 620 741 ist eine Greifervorrichtung für eine Webmaschine bekannt, bei welcher ein Antriebsstrang ein drehfest mit einer Antriebswelle verbundenes Antriebszahnrad für eine Greiferstange antreibt. In dem Antriebsstrang sind an einem Ritzel und einem Kegelzahnrad erste und zweite Eingriffsmittel vorgesehen. Diese Eingriffsmittel können mittels eines Elektromagneten in eine erste Relativstellung und eine zweite Relativstellung gebracht werden, wobei das Antriebszahnrad in der ersten Relativstellung der Eingriffsmittel vom Antriebsstrang zur Drehung antreibbar ist und in der zweiten Relativstellung der Eingriffsmittel vom Antriebsstrang getrennt ist.

Die aus der FR-A-2 620 741 bekannte Kupplungseinrichtung kommt nur bei Auftreten eines Fadenrisses zum Einsatz.

Es ist Aufgabe der Erfindung, eine Doppelgreifer-Webmaschine bereitzustellen, mittels derer es möglich ist, mit einer einzigen Spule zu weben, während der vorstehend genannte Nachteil - das unnötige Antreiben einer Greifervorrichtung - ausgeschlossen ist.

Es ist eine weitere Aufgabe, eine Webmaschine mit mehr als zwei Greifervorrichtung bereitzustellen, mit der das Weben bestimmter Webarten, die nicht das gleichzeitige Antreiben aller Greifervorrichtungen erfordern, ohne den gleichen Nachteil - den nutzlosen Betrieb wenigstens einer Greifervorrichtung - möglich ist.

Ein Gegenstand der Erfindung ist eine Vorrichtung, mittels derer gemäß einem Schaltzyklus, einstellbar oder auf andere Weise, die Antriebsvorrichtung einer Greifervorrichtung einer Webmaschine während des Webens alternierend ein- und ausgeschaltet werden kann, wobei der Schaltzyklus in Phase zum Schußzyklus läuft und als Funktion der Eigenschaften der gewünschten Webart bestimmt ist und zwar derart, daß die Antriebsvorrichtung nur dann eingeschaltet wird, wenn die Greifervorrichtung, von der die Antriebsvorrichtung einen Teil bildet, einen Schußfaden in ein zwischen den Kettfäden gebildetes Fach einzutragen hat. Eine derartige erfindungsgemäße Vorrichtung wird im folgenden Ein- und Ausschaltvorrichtung genannt.

Ein weiterer Gegenstand der Erfindung ist eine Webmaschine mit wenigstens zwei Greifervorrichtungen, welche Webmaschine mit wenigstens einer erfindungsgemäßen Ein- und schaltvorrichtung versehen ist, mit einem derartigen Schaltzyklus, daß während jedes Schußzyklus jede Antriebsvorrichtung der Greifervorrichtung(en), die einen Schußfaden einzutragen hat (haben), eingeschaltet wird und jede Antriebsvorrichtung der Greifervorrichtung(en), die keinen Schußfaden einzutragen hat (haben), ausgeschaltet wird.

Eine weiterer Gegenstand der Erfindung ist ein Verfahren zum Einzelspulen-Weben eines Doppelpolgewebes unter Verwendung einer Greifer-Webmaschine mit zwei (Doppelgreifer-Webmaschine) oder mehr in unterschiedlichen Höhen angeordneten Greifervorrichtungen. Bei diesem Verfahren wird, wenn eine der Greifervorrichtungen angetrieben wird, um einen Schußfaden in das Gewebe einzutragen, keine der anderen Greifervorrichtungen angetrieben.

Ein weiterer Gegenstand der Erfindung ist ein Verfahren zum Doppelspulen-Weben eines Doppelpolgewebes gemäß einer Zweischuß-Webart, unter Verwendung einer Dreigreifer-Webmaschine, wobei bei diesem Verfahren während jedes Schlags die mittlere Greifervorrichtung angetrieben wird, um in jedem Fall einen Schußfaden einzubringen, wohingegen während aufeinanderfolgender Schläge die oberen und unteren Greifervorrichtungen alternierend angetrieben werden, um in jedem Fall einen Schußfaden einzubringen, während die unteren und oberen Greifervorrichtungen alternierend nicht angetrieben werden.

Die erfindungsgemäße Ein- und Ausschaltvorrichtung besteht aus einem Antriebszahnrad, das auf der Antriebswelle derart angeordnet ist, daß es sich um die Welle dreht, und mit Mitteln versehen ist, durch welche entsprechende Mittel - die an der Antriebswelle oder einem Teil, der durch die Welle angetrieben werden kann, vorgesehen sind - zusammenwirken können, um die Drehbewegung der Antriebswelle auf das Antriebszahnrad zu übertragen. Hierbei können die entsprechenden Mittel oder das Teil, an dem diese Mittel vorgesehen sind, einerseits in eine erste Stellung bewegt werden, in welcher diese Mittel mit den Mitteln des Antriebszahnrads zusammenwirken bzw. in welcher die sich drehende Antriebswelle das Teil antreiben kann, während die Mittel dieses Teils mit den Mitteln des Antriebszahnrads zusammenwirken, und können andererseits in eine zweite Stellung bewegt werden, in welcher die entsprechenden Mittel nicht mit den Mitteln des Antriebszahnrads zusammenwirken bzw. in welcher die sich drehende Antriebswelle das Teil nicht antreibt. Die Mittel werden mechanisch, elektromagnetisch, pneumatisch oder in anderer Weise derart gesteuert, daß gemäß einem bestimmten einstellbaren Zyklus, der in Phase zu dem Schußzyklus arbeitet, vor jedem Schlag die erste bzw. die zweite Stellung automatisch eingenommen wird, und derart, daß in Abhängigkeit davon, ob der Betrieb der Greifervorrichtung - als Funktion der gewünschten Webart - notwendig und wirksam ist oder nicht, die Mittel entweder eine erste oder eine zweite Stellung einnehmen. Die Steuermittel können derart ausgelegt, eingestellt oder programmiert sein, daß verschiedene Schaltzyklen erreicht werden können.

In einer bevorzugten Ausführungsform der erfindungsgemäßen Ein- und Ausschaltvorrichtung, umfaßt diese Vorrichtung ein Antriebszahnrad einer Greifervorrichtung, das an einer Antriebswelle auf einem Lager angeordnet ist. Dieses Antriebszahnrad ist einerseits mit einer Außenverzahnung zum Antreiben einer Greiferstange in bekannter Art und Weise und andererseits mit Mitteln versehen, durch welche das Antriebszahnrad von einem Element, das mit entsprechenden ersten Mitteln versehen ist, zu gemeinsamer Drehbewegung mit der Antriebswelle angetrieben werden kann, wenn sich das Element mit der Antriebswelle dreht.

Das vorstehend genannte Element kann zu diesem Zweck in eine erste Stellung bewegt werden, in der die ersten Mittel oder daran vorgesehene zweite Mittel mit entsprechenden unbeweglich an der Antriebswelle festgelegten Mitteln kämmen, wobei das Element infolgedessen zu einer Drehbewegung gemeinsam mit der Antriebswelle angetrieben wird, und die ersten Mittel mit den Mitteln des Antriebszahnrads kämmen, wobei das Antriebszahnrad infolgedessen ebenfalls zu einer Drehbewegung mit der Antriebswelle angetrieben wird und seinerseits die Greifer antreiben kann.

Das vorstehend genannte Element kann ferner in eine zweite Stellung bewegt werden, in der die vorstehend genannten ersten und zweiten Mittel außerhalb des Bereichs der unbeweglich an der Antriebswelle festgelegten entsprechenden Mittel sind, so daß das Element sich nicht mit der Antriebswelle dreht und sich somit auch das Antriebszahnrad nicht mit ihr dreht und die Greifer in Ruhe verbleiben.

Zum Einnehmen entweder der ersten oder der zweiten Stellung wird das vorstehend genannte Element in bekannter Art und Weise angetrieben, bspw. mechanisch mittels eines Nockenmechanismus oder von pneumatischen oder elektromagnetischen Mitteln, von anderen bekannten Steuermitteln oder von einer Kombination dieser Mittel. Diese Steuerung erfolgt derart, daß das Element die erste oder zweite Stellung einnimmt, wenn die Greifervorrichtung gemäß der gewünschten Webart einen Schußfaden in das Gewebe einzutragen bzw. nicht einzutragen hat, während natürlich sichergestellt ist, daß der Zyklus dieser Steuerung in Phase zu dem Schußzyklus läuft, so daß ein Schußfaden in jedem Fall im richtigen Augenblick eingetragen werden kann. Die Steuermittel können ferner derart ausgelegt sein, daß der Steuerzyklus durch Einstellen bestimmter Teile und/oder durch Ersetzen bestimmter Teile durch andere Teile und/oder durch Programmieren einer mit den Steuermitteln zusammenwirkenden Vorrichtung geändert werden kann.

Eine besonders vorteilhafte Ausführungsform der erfindungsgemäßen Ein- und Ausschaltvorrichtung besteht aus einem triebszahnrad, das nicht verdrehbar mit einer Nabenbüchse verbunden ist, welche ihrerseits an der Antriebswelle verdrehbar angebracht ist. Die Nabenbüchse weist eine zylindrische Außenverzahnung auf. Das Antriebszahnrad weist eine Außenverzahnung auf, die mit der Greiferstange kämmt, um diese hin- und herzubewegen. Ferner ist auf der gleichen Antriebswelle ein Antriebsring nicht verdrehbar angeordnet. Der Antriebsring weist analog eine zylindrische Außenverzahnung auf, die den gleichen Durchmesser wie die verzahnung an der Nabenbüchse hat.

Ein Gleitelement dieser Ausführungsform besteht aus einem ringförmigen Stück mit einer zentralen zylindrischen Öffnung, die mit einer Innenverzahnung versehen ist. Die zentrale Öffnung und die vorgesehene Innenverzahnung weisen solche Durchmesser auf, daß die Außenverzahnung der Nabenbüchse und die Außenverzahnung des Antriebsrings gleitverschieblich in die Innenverzahnung des Gleitrings passen.

Der Gleitring ist derart angeordnet, daß Antriebswelle, Nabenbüchse und Antriebsring im rechten Winkel zu dem ringförmigen Stück durch die zentrale Öffnung verlaufen. Der Gleitring kann nun durch mit dem Gleitringstück verbundene Steuermittel in zwei unterschiedlichen Stellungen angeordnet werden. In der ersten Stellung ist das Gleitringstück derart angeordnet, daß der Antriebsring und die Nabenbüchse in der zentralen Öffnung angeordnet sind und die Innenverzahnung sowohl mit der Außenverzahnung der Nabenbüchse des Antriebszahnrads als auch mit der Außenverzahnung des Antriebsrings kämmt. Wenn sich die Antriebswelle dreht, wird der Gleitring - ungeachtet der Drehrichtung - durch den Antriebsring in der gleichen Drehrichtung angetrieben, während letzterer seinerseits die Nabenbüchse und somit das Antriebszahnrad antreibt. Das Antriebszahnrad dreht sich folglich zusammen mit der Antriebswelle.

In der zweiten Stellung ist der Gleitring derart angeordnet, daß nur die Nabenbüchse in der zentralen Öffnung angeordnet ist und die Innenverzahnung folglich nur mit der Außenverzahnung der Nabenbüchse des Antriebszahnrads kämmt. Wenn sich die Antriebswelle dreht, wird die Drehbewegung nicht auf das Antriebszahnrad übertragen.

In dem scheibenförmigen Teil des Antriebszahnrads ist eine Öffnung vorgesehen. Wenn sich das Antriebszahnrad in der Stellung befindet, in welcher der damit zusammenwirkende Greifer vollständig außerhalb des Fachs ist, liegt diese öffnung genau unter- bzw. oberhalb eines Stifts, der an dem Träger des Gleitrings befestigt ist. Wenn der Gleitring in die vorstehend genannte zweite Stellung bewegt wird, gleitet als erstes der Stift in die Öffnung, so daß das Antriebszahnrad in seiner Leerlaufstellung gehalten ist, bevor die Kupplung zu dem Antriebsring freigegeben wird.

Der Gleitring ist mit Mitteln verbunden, die ihn gemäß einem bestimmten Zyklus alternierend in die erste und die zweite Stellung überführen können. Diese Mittel werden zu diesem Zweck durch bekannte Mechanismen gesteuert, die einstellbar sind und/oder programmierbar sind und/oder tauschbare Teile enthalten, durch die verschiedene Schaltzyklen erreicht werden können.

An der gleichen Antriebswelle können zwei oder mehr derartige Ein- und Ausschaltvorrichtungen vorgesehen sein.

Weitere Merkmale und Vorteile der Erfindung werden mit Bezug auf die folgende detaillierte Beschreibung einer bevorzugten Ausführungsform der Erfindung erläutert werden, jedoch ist die Erfindung nicht auf diese Ausführungsform beschränkt.

Die Erfindung ist in den Ansprüchen 1-19 dargelegt.

Die detaillierte Beschreibung wird mittels der beigefügten:

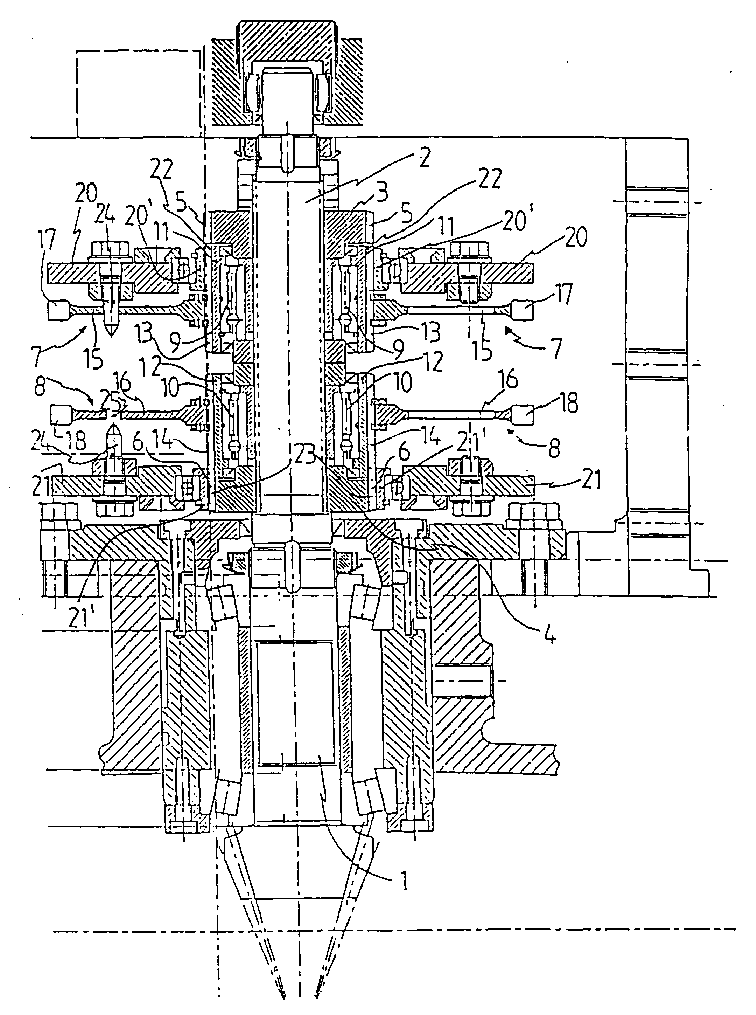

- Figur 1: erläutert, die einen Vertikalschnitt einer bevorzugten Ausführungsform einer erfindungsgemäßen Ein- und Ausschaltvorrichtung darstellt.

Eine vertikal angeordnete Antriebswelle 1, 2 wird durch bekannte Antriebsvorrichtungen alternierend in einer Drehrichtung und unmittelbar hierauf in der anderen Drehrichtung mit Bewegungszeiten angetrieben, die in dem Befehlswinkel des Schußzyklus festgelegt sind. Zwei Antriebsringe 3, 4 sind an der Antriebswelle 2 nicht-verdrehbar befestigt, so daß sie sich zusammen mit der Antriebswelle 2 drehen. Diese Antriebsringe 3, 4 weisen jeweils eine Außenzahnverzahnung 5 bzw. 6 auf. Zwei Antriebszahnräder 7, 8 sind auf Lagern 9 bzw. 10 an der Antriebswelle 2 drehbar befestigt. Jedes Antriebszahnrad 7 bzw. 8 ist nicht-verdrehbar an einer Nabenbüchse 11 bzw. 12 befestigt, die an ihrem Außenumfang eine Außenverzahnung 13 bzw. 14 aufweist sowie ein scheibenförmiges Teil 15 bzw. 16, das relativ zu den Wandungen der zentralen zylindrischen Teile 11, 12 symmetrisch und im rechten Winkel zu diesen verläuft. Am senumfang der scheibenförmigen Teile 15, 16 sind Außenverzahnungen 17, 18 vorgesehen. Der Außendurchmesser der zylindrischen Teile 11, 12 der Nabenbüchsen ist identisch zum Außendurchmesser der Antriebsringe 3, 4 und die daran vorgesehenen Verzahnungen 13, 14 sind den entsprechenden Verzahnungen 5, 6 am Außenumfang der Antriebsringe 3, 4 identisch.

Die Antriebsringe 3, 4 und die Nabenbüchsen 11, 12 der Antriebszahnräder 7, 8 sind koaxial auf der Antriebswelle 2 angeordnet, wobei die Antriebszahnräder 7, 8 übereinander angeordnet sind und die Antriebsringe 3, 4 auf der Welle 2 oberhalb und unterhalb der beiden Antriebszahnräder 7 bzw. 8 derart angeordnet sind, daß die Antriebsringe 3, 4 gegen die jeweils an der Antriebswelle 2 befestigten Teile des Lagers 9 bzw. des Lagers 10 anliegen, während die Außenwandung der auf den Lagern 9 bzw. 10 verdrehbaren Nabenbüchse 11 bzw. 12 des Antriebszahnrads 7 bzw. 8 einen kleinen Abstand von der Außenwandung des Antriebsrings 3 bzw. 4 aufweist. Hierbei sind die Außenwandungen des Antriebsrings 3 und des Teils 9 bzw. des Antriebsrings 4 und des Teils 10, die den gleichen Durchmesser aufweisen, zueinander ausgerichtet und folglich sind auch die Verzahnungen 5 und 13 bzw. 6 und 14 mit einem kleinen Abstand dazwischen zueinander ausgerichtet.

Die Ein- und Ausschaltvorrichtung besteht bei diesem bevorzugten erfindungsgemäßen Doppel-Ausführungsbeispiel ferner aus zwei identischen Gleitringen 20', 21', welche mit einer Innenverzahnung 22, 23 versehen sind. Die Durchmesser dieser Öffnungen und diese Innenverzahnungen sind derart ausgelegt, daß die Gleitringe 20', 21' relativ zur Antriebswelle 2 koaxial angeordnet werden können, wobei die Nabenbüchse 11 bzw. 12 des Antriebszahnrads 7 bzw. 8 und/oder der Antriebsring 3 bzw. 4 in der Zentralöffnung liegen, während die entsprechenden Innenverzahnungen 22, 23 mit den Außenverzahnungen 13 bzw. 14 der Nabenbüchsen 11, 12 der Antriebszahnräder 7, 8 und/oder der Außenverzahnung 5 bzw. 6 der Antriebsringe 3, 4 kämmen können.

Jeder Gleitring 20', 21' ist mit einer Schaltplatte 20, 21 verbunden, welche zu dem Zweck, den Gleitring gemäß einem durch die Nocken bestimmten und sich zu dem Schußzyklus in Phase befindenden Zyklus alternierend eine erste und zweite Stellung einnehmen zu lassen, ihrerseits mittels eines Nokkenmechanismus bewegt werden kann.

In Figur 1 ist der obere Gleitring 20' in der zweiten Stellung angeordnet und der untere Gleitring 21' ist in der ersten Stellung angeordnet. In der zweiten Stellung ist der Gleitring 20', 21' in einer derartigen Höhe angeordnet, daß seine Innenverzahnung 22, 23 nur mit der Außenverzahnung 13, 14 der Nabenbüchse 11, 12 des Antriebszahnrads 7, 8 kämmen kann.

In der ersten Stellung ist der Gleitring 20', 21' auf einer derartigen Höhe angeordnet, daß seine Innenverzahnung 22, 23 sowohl mit der Außenverzahnung 13, 14 der Nabenbüchse 11, 12 des Antriebszahnrads 7, 8 als auch mit der Außenverzahnung 5, 6 des Antriebsrings 3, 4 kämmen kann.

In dieser ersten Stellung wird die Drehbewegung der Antriebswelle 2 mittels des Antriebsrings 3, 4 und des Gleitrings 20', 21' auf das Antriebszahnrad 7, 8 übertragen.

In der zweiten Stellung wird der Gleitring 20', 21' nicht durch den Antriebsring 3, 4 angetrieben, so daß sowohl der Gleitring 20', 21' als auch das Antriebszahnrad 7, 8 im Leerlauf verbleiben.

In dem scheibenförmigen Teil 15, 16 jedes Antriebszahnrads 7, 8 ist eine Öffnung 25 vorgesehen. Wenn der von einem bestimmten Antriebszahnrad 7, 8 angetriebene Greifer vollständig aus dem Fach herausbewegt worden ist, befindet sich das Antriebszahnrad 7, 8 noch in der gleichen Stellung, wobei die Öffnung 25 einem an der Schaltplatte 20, 21 angeordneten Stift 24 gegenüberliegt. Diese Schaltplatte ist durch bekannte Mittel nicht-drehbar gehalten.

Wenn der Gleitring 20', 21' in der zweiten Stellung angeordnet ist, greift der Stift 24 in die Öffnung 25 ein. Das in der zweiten Stellung von der Antriebswelle 2 nicht angetriebene Antriebszahnrad 7, 8 wird auf diese Weise an weiterer Drehung gehindert und findet somit in jedem Fall den Synchronisationspunkt wieder. Der Stift 24 greift zuerst in die Öffnung 25 ein und erst dann wird die Verbindung zwischen Antriebs- und Gleitring freigegeben. Ferner verläßt der Stift 24 die Bohrung 25 erst dann, wenn die Verbindung zwischen Antriebs- und Gleitring bereits zustande gekommen ist. Auf diese Weise geht die Synchronisation nicht verloren.

In dem Fall von Webmaschinen, bei denen jede Greifervorrichtung aus zwei zu beiden Seiten der Webmaschine angeordneten Teilen besteht, wobei jeder ein Antriebszahnrad und einen von dem Antriebszahnrad angetriebenen Greifer umfaßt, ist auf beiden Seiten der Webmaschine eine derartige Ein- und Ausschaltvorrichtung vorgesehen.

Die vertikale Antriebswelle dreht sich in einer Richtung, um die Greifer mittels ihrer Antriebszahnräder in das Fach des Gewebes einzuführen, und unmittelbar hierauf in der anderen Richtung, um die Greifer aus dem Fach zu entfernen.

Dann folgt eine bestimmte Leerlaufzeitdauer für die Greifer, während der die Schußfäden durch die Bewegung des Kamms angeschlagen werden.

Während dieser Leerlaufzeitdauer wird mittels der erfindungsgemäßen Ein- und Ausschaltzeitdauer sichergestellt, daß durch Überführen der jeweiligen Ein- und Ausschaltvorrichtungen in die bzw. Halten dieser in der ersten bzw. zweiten Stellung jeder Greifer, der beim nächsten Schuß einen Schußfaden einzutragen hat, eingeschaltet wird (oder bleibt) und daß jeder Greifer, der beim nächsten Schuß keinen Schußfaden einzutragen hat, ausgeschaltet wird (oder bleibt).

Dieses Ein- bzw. Ausschalten wird mittels einer Schaltplatte 20, 21 durchgeführt, die den Gleitring 20', 21' bei ihrer Bewegung mitnehmen kann.

Die Bewegung der Schaltplatte wird wiederum durch ihre Verbindung zu einem (nicht dargestellten) Nocken- und mechanismus erhalten.

Dieser Nocken- und Stangenmechanismus ist derart ausgelegt, daß das Schaltmuster der erfindungsgemäßen Ein- und Ausschaltvorrichtung gemäß den Merkmalen der gewünschten Webart stattfindet.

Für Einzelgreifer-Webarten mit alternierend einem Schußeintrag in das Obergewebe und einem Schußeintrag in das Untergewebe gemäß einem erfindungsgemäßen Verfahren werden alternierend der obere Greifer eingeschaltet und der untere Greifer ausgeschaltet und beim nächsten Schuß wird der untere Greifer eingeschaltet und der obere Greifer ausgeschaltet.

Die erfindungsgemäße Ein- und Ausschaltvorrichtung kann auch in Verbindung mit drei oder vier oder mehr übereinander angeordneten Greifern ausgebildet sein, um bestimmte Webarten zu weben. Eine Vorrichtung mit bspw. drei Greifern kann gemäß einem weiteren erfindungsgemäßen Verfahren sehr effektiv zum Weben eines Zweischußgewebes ohne Mischkonturen eingesetzt werden. Im Fall dieses Verfahrens wird der mittlere Greifer in jedem Schuß eingeschaltet; im ersten Schuß wird der obere Greifer eingeschaltet und der untere Greifer ausgeschaltet und im folgenden Schuß umgekehrt. Die Vorteile dieses Webverfahrens sind die folgenden: Die Spannkettfäden müssen keinerlei Hub mehr ausführen und können stationär angeordnet sein; für die Bindekettfäden steht zusätzliche Bewegungszeit zur Verfügung: die Bindekettfäden des Obergewebes können kreuzen, während die Schußfäden in das Untergewebe eingetragen werden; die eingebundenen Polkettfäden müssen keinerlei Hübe ausführen; die Webart ruft keine Mischkonturen hervor und bei der Musterdefinition bedeutet 1 Schlag in der Kartenzeichnung eine Polreihe.

Diese Vorrichtung mit drei steuerbaren Greifern kann gemäß einem erfindungsgemäßen Verfahren auch zur Erzielung einer Einzelschuß-Webart mit eingebundenen toten Choren (Polfäden) verwendet werden. In diesem Fall ist der Arbeitsablauf wie folgt: im ersten Schuß arbeitet der mittlere Greifer (die anderen sind ausgeschaltet), im zweiten Schuß arbeitet der obere, im dritten Schuß der untere und im vierten Schuß der mittlere. In diesem Fall müssen die Spannkettfäden wiederum stationär angeordnet werden, den Bindekettfäden steht zusätzliche Bewegungszeit zur Verfügung und zum Einbinden der toten Chore (der toten Polfäden) werden keinerlei Hübe benötigt.

Mehrere erfindungsgemäße Ein- und Ausschaltvorrichtungen, die zum Betrieb in Verbindung mit zwei oder mehr Schußeintragsvorrichtungen an einer Webmaschine ausgebildet sind, bilden einen weiteren Gegenstand der Erfindung.

Ferner bilden unmittelbar nach einem erfindungsgemäßen Verfahren gewobene Doppelpolgewebe einen Gegenstand der Erfindung.

Der Vorteil der Erfindung liegt in einem effizienteren Einsatz von Webmaschinen mit zwei oder mehr Greifervorrichtungen, um bestimmte Webarten zu weben, wobei in diesem Fall keine der Greifervorrichtungen gleichzeitig mit den anderen angetrieben werden muß. Die Vorrichtung kann jedoch auch bei einer herkömmlichen Doppelgreiferwebmaschine eingesetzt werden, bei welcher jede Greifervorrichtung bei jedem Schlag angetrieben wird. Insbesondere stellt die Erfindung ein Mittel bereit, das bei jedem Schuß lediglich die Greifervorrichtung(en) antreibt, die einen Schußfaden einzutragen hat/haben, so daß eine Greifervorrichtung, die keinen Schußfaden einzutragen hat, nicht unnötigerweise angetrieben wird. Daher wird für die Greifervorrichtung weniger Energie benötigt. Auch wird die Abnutzung der Greiferverzahnung beträchtlich verringert, da jeder Greifer lediglich den unbedingt erforderlichen Arbeitszyklen unterworfen wird.

Ein weiterer Vorteil der Erfindung liegt darin, daß die Ein- und Ausschaltvorrichtung mit begrenzten Mitteln erhalten werden kann, geringer Abnutzung unterworfen ist, und zur Zusammenarbeit mit mehr als zwei Greifervorrichtungen ausgelegt werden kann.

Die vorstehenden Vorteile können nicht (alle) bei den bekannten Vorrichtungen gefunden werden.

Es wurde eine Ein- und Ausschaltvorrichtung für eine Webmaschine vorgestellt, umfassend ein Antriebszahnrad 7, 8, das derart angeordnet ist, daß es sich um die Antriebswelle 2 dreht, und das mit Mitteln 13, 14 versehen ist mit denen entsprechende Mittel 22, 23 an einem Teil 20', 21', das durch die Welle 2 angetrieben wird, zusammenwirken können, um die Drehbewegung der Welle 2 auf das Zahnrad 7, 8 zu übertragen, während das Teil 20', 21' in eine erste Stellung gebracht werden kann, in der die Mittel 23, 25 mit den Mitteln 13, 14 zusammenwirken und das Teil 20', 21' durch die sich drehende Antriebswelle 2 angetrieben wird, und in eine zweite Stellung gebracht werden kann, in der das Teil 20', 21' nicht durch die sich drehende Welle 2 angetrieben wird. Ferner wurde eine Webmaschine vorgestellt mit zwei oder mehr Greifervorrichtungen, die mit Ein- und Ausschaltvorrichtungen versehen sind, um während des Webens lediglich die Greifervorrichtungen automatisch einzuschalten, die einen Schußfaden einzutragen haben. Schließlich wurden Verfahren zum Weben eines Doppelpolgewebes vorgestellt, bei welchem lediglich die Greifervorrichtung angetrieben wird, die einen Schußfaden einzutragen hat.

## Patentansprüche

1. Greifervorrichtung für eine Webmaschine, umfassend eine Greiferstange mit einem Greifer und ein auf einer Antriebswelle (2) der Webmaschine angeordnetes Antriebszahnrad (7; 8) zum Antreiben der Greiferstange,
wobei das Antriebszahnrad (7; 8) mit ersten Eingriffsmitteln (13; 14) versehen ist, und die Antriebswelle (2) oder ein von der Antriebswelle (2) antreibbares Teil (20'; 21') mit zweiten Eingriffsmitteln (22; 23) versehen ist,
wobei die ersten und zweiten Eingriffsmittel (13, 22; 14, 23) wenigstens in eine erste Relativstellung und eine zweite Relativstellung überführbar sind,
wobei das Antriebszahnrad (7; 8) in der ersten Relativstellung der ersten und zweiten Eingriffsmittel (13, 22; 14, 23) relativ zur Antriebswelle (2) festgelegt und von dieser antreibbar ist, während es in der zweiten Relativstellung der ersten und zweiten Eingriffsmittel (13, 22; 14, 23) relativ zur Antriebswelle (2) frei verdrehbar und von dieser nicht angetrieben ist,
wobei eine Steuervorrichtung vorgesehen ist, welche die ersten und zweiten Eingriffsmittel (13, 22; 14, 23) während des Webens automatisch in ihre erste bzw. zweite Relativstellung überführt.

2. Greifervorrichtung nach Anspruch 1,
**dadurch gekennzeichnet,** daß die Steuervorrichtung gemäß einem vorbestimmten, sich in Phase zu dem Schußzyklus der Webmaschine befindenden Schaltzyklus arbeitet.

3. Greifervorrichtung nach Anspruch 1 oder 2,
**dadurch gekennzeichnet**, daß an der Antriebswelle (2) dritte Eingriffsmittel (5; 6) festgelegt sind, welche in der ersten Relativstellung der ersten und zweiten Eingriffsmittel (13, 22; 14, 23) mit den zweiten Eingriffsmitteln (22; 23) derart zusammenwirken, daß das Antriebszahnrad (7; 8) auf der Antriebswelle (2) festgelegt und von dieser antreibbar ist.

4. Greifervorrichtung nach Anspruch 3,
**dadurch gekennzeichnet**, daß die zweiten Eingriffmittel (22; 23) an einem in Achsrichtung der Antriebswelle (2) zwischen wenigstens einer ersten Stellung und einer zweiten Stellung verschiebbaren Schiebeelement (20'; 21') vorgesehen sind,
wobei in der ersten Stellung des Schiebeelements (20'; 21') die zweiten und dritten Eingriffsmittel (22, 5; 23, 6) miteinander in Eingriff sind zur Übertragung einer Drehung der Antriebswelle (2) auf das Schiebeelement (20'; 21') und gleichzeitig die ersten und zweiten Eingriffsmittel (13, 22; 14, 23) miteinander in Eingriff sind zur Übertragung der Drehung des Schiebeelements (20'; 21') auf das Antriebszahnrad (7; 8), und
wobei in der zweiten Stellung des Schiebeelements (20'; 21') die zweiten Eingriffsmittel (22; 23) entweder nur mit den ersten Eingriffsmitteln (13; 14) oder nur mit den dritten Eingriffsmitteln (5; 6) in Eingriff sind.

5. Greifervorrichtung nach Anspruch 4,
**dadurch gekennzeichnet,** daß das Antriebszahnrad (7; 8) ein zentrales zylinderförmiges Teil (11; 12) umfaßt, das auf einem Lager (9, 10) symmetrisch um die Welle (2) verläuft und mit einer die ersten Eingriffsmittel bildenden Außenverzahnung (13; 14) versehen ist, sowie ein scheibenförmiges Teil (15; 16) umfaßt, das symmetrisch um das zylinderförmige Teil (11; 12) angeordnet und zum Antreiben der Greiferstange mit einer Außenverzahnung (17, 18) versehen ist,
daß an einem Antriebsring (3; 4), der in nicht-verdrehbarer Weise koaxial auf der Antriebswelle (2) angeordnet ist und den gleichen Außendurchmesser wie das zylinderförmige Teil (11; 12) aufweist, eine die dritten Eingriffsmittel bildende Außenverzahnung (5; 6) vorgesehen ist und
daß eine die zweiten Eingriffsmittel bildende Innenverzahnung (22; 23) an einer zentralen zylinderförmigen Öffnung eines das Schiebeelement bildenden Gleitrings (20'; 21') vorgesehen ist,
wobei die Innenverzahnung (22; 23) derart bemessen ist, daß das zylinderförmige Teil (11; 12) des Antriebszahnrads (7; 8) oder/und der Antriebsring (3; 4) in die zentrale Öffnung eingeführt werden kann bzw. können,
wobei in der ersten Stellung des Gleitrings (20'; 21') bzw. der ersten Relativstellung der Innenverzahnung (22; 23) und der Außenverzahnung (13; 14) des Antriebszahnrads (7; 8) die Innenverzahnung (22; 23) sowohl mit der Außenverzahnung (13; 14) des Antriebszahnrads (7; 8) als auch mit der Außenverzahnung (5; 6) des Antriebsrings (3; 4) kämmt, und
wobei in der zweiten Stellung des Gleitrings (20'; 21') bzw. der zweiten Relativstellung der Innenverzahnung (22; 23) und der Außenverzahnung (13; 14) des Antriebszahnrads (7; 8) die Innenverzahnung (22; 23) entweder mit der Außenverzahnung (13; 14) des Antriebszahnrads (7; 8) oder der Außenverzahnung (5; 6) des Antriebsrings (3; 4) kämmt.

6. Greifervorrichtung nach einem der Ansprüche 1 bis 5,
**dadurch gekennzeichnet**, daß eine Arretiervorrichtung (24, 25) vorgesehen ist, welche das Antriebszahnrad (7; 8) in der zweiten Relativstellung der ersten und zweiten Eingriffsmittel (13, 22; 14; 23) in einer vorbestimmten Arretierstellung hält.

7. Greifervorrichtung nach Anspruch 6,
**dadurch gekennzeichnet**, daß die Arretiervorrichtung (24, 25) durch eine Steuervorrichtung gesteuert ist.

8. Greifervorrichtung nach Anspruch 6 oder 7,
**dadurch gekennzeichnet**, daß die Arretiervorrichtung (24, 25) wenigstens einen in Achsrichtung der Antriebswelle (2) durch die Steuervorrichtung verschiebbaren Stift (24) und eine in dem Antriebszahnrad (7; 8) vorgesehene Öffnung (25) umfaßt,
wobei der Stift (24) in die Öffnung (25) eingreift, wenn sich die ersten und zweiten Eingriffselemente (13, 22; 14, 23) in ihrer zweiten Relativstellung befinden, und
wobei der Stift (24) nicht in die Öffnung (25) eingreift, wenn sich die ersten und zweiten Eingriffselemente (13, 22; 14, 23) in ihrer ersten Relativstellung befinden.

9. Greiferanordnung für eine Webmaschine mit jeweils einer Greifervorrichtung nach einem der vorhergehenden Ansprüche auf jeder der beiden Seiten der Webmaschine.

10. Greiferanordnung für eine Webmaschine mit wenigstens zwei übereinander angeordneten Greifervorrichtungen nach einem der vorhergehenden Ansprüche.

11. Greiferanordnung nach Anspruch 10,
**dadurch gekennzeichnet**, daß auf einer Antriebswelle (2) wenigstens zwei Antriebszahnräder (7; 8) übereinander angeordnet sind,
wobei auf der Antriebswelle (2) in geringem Abstand von jedem Antriebszahnrad (7; 8) jeweils ein Antriebsring (3; 4) angeordnet ist, und
wobei die Außenwandung eines zylinderförmigen Teils (11; 12) jedes Antriebszahnrads (7; 8) einen geringen Abstand von der Außenwandung des Antriebsrings (3; 4) aufweist und zu dieser ausgerichtet ist, so daß auch deren Verzahnungen (5, 13; 6, 14) in geringem Abstand zueinander ausgerichtet sind, und daß im Bereich jedes einen Antriebsring (3; 4) und ein Antriebszahnrad (7; 8) umfassenden Satzes jeweils ein in zwei Stellungen einstellbarer Gleitring (20'; 21') angeordnet ist,
wobei in einer ersten der beiden Stellungen der Antriebsring (3; 4) und das Antriebszahnrad (7; 8) sich in eine zentrale Öffnung des Gleitrings (20'; 21') erstrecken und eine Innenverzahnung (22; 23) des Gleitrings (20'; 21') sowohl mit der Verzahnung (13; 14) des Antriebszahnrads (7; 8) als auch mit der Verzahnung (5; 6) des Antriebsrings (3; 4) kämmt, und
wobei in einer zweiten der beiden Stellungen nur das Antriebszahnrad (7; 8) sich in die zentrale Öffnung des Gleitrings (20'; 21') erstreckt und die Innenverzahnung (22; 23) des Gleitrings (20'; 21') nur mit der Verzahnung (13; 14) des Antriebszahnrads (7; 8) kämmt.

12. Greiferanordnung nach einem der Ansprüche 9 bis 11, **dadurch gekennzeichnet**, daß jeder Gleitring (20'; 21') mit einem Teil (20; 21) einer Steuervorrichtung verbunden ist, welches derart bewegt wird, daß es den Gleitring (20'; 21') vor jedem Schlag gemäß einem sich in Phase mit dem Schußzyklus befindenden Zyklus automatisch in die erste oder die zweite Stellung überführt, wobei das Teil (20; 21) der Steuervorrichtung seinerseits durch eine Vorrichtung bewegt wird, die durch mechanische und/oder elektromagnetische und/oder pneumatische und/oder elektrische und/oder elektronische Mittel angetrieben oder gesteuert ist.

13. Greiferanordnung nach Anspruch 12,
**dadurch gekennzeichnet**, daß die Steuervorrichtung gemäß einem einstellbaren Zyklus arbeitet, wobei zum Einstellen des Zyklus bestimmte Teile eingestellt oder durch andere ersetzt und/oder programmiert werden müssen und/oder eine mit der Steuervorrichtung zusammenwirkende programmierbare Vorrichtung programmiert werden muß.

14. Greiferanordnung nach Anspruch 12 oder 13,
**dadurch gekennzeichnet**, daß die Steuervorrichtung ein Nocken- und Stangenmechanismus ist.

15. Webmaschine mit wenigstens zwei übereinander angeordneten Greifervorrichtungen nach einem der Ansprüche 1 bis 8 bzw. einer Greiferanordnung nach einem der Ansprüche 9 bis 14.

16. Webverfahren unter Verwendung einer Greifer-Webmaschine mit wenigstens zwei übereinander angeordneten Greifervorrichtungen nach einem der Ansprüche 1 bis 8 bzw. einer Greiferanordnung nach einem der Ansprüche 9 bis 14, **dadurch gekennzeichnet**, daß die Steuervorrichtung während des Webens die ersten und zweiten Eingriffsmittel (13, 22; 14, 23) in Abhängigkeit des zu webenden Gewebes während einer Leerlaufzeitdauer der Greifervorrichtungen vor jedem Schußeintrag automatisch in ihre erste bzw. ihre zweite Relativstellung überführt.

17. Verfahren nach Anspruch 16,
**dadurch gekennzeichnet,** daß die Steuervorrichtung zum Einzel spulen-Weben eines Doppelpolgewebes unter Verwendung einer Greifer-Webmaschine mit wenigstens zwei übereinander angeordneten Greifervorrichtungen dann, wenn sie die Eingriffsmittel (13, 22; 14, 23) einer der Greifervorrichtungen in die erste Relativstellung überführt, die Eingriffsmittel (13, 22; 14, 23) der jeweils anderen Greifervorrichtungen in die zweite Relativstellung überführt.

18. Verfahren nach Anspruch 16,
**dadurch gekennzeichnet**, daß die Steuervorrichtung zum Einzel spulen-Weben eines Doppelpolgewebes gemäß einer Zweischuß-Webart unter Verwendung einer Dreigreifer-Webmaschine für den Eintrag eines Schußfadens die Eingriffsmittel (13, 22; 14, 23) der mittleren, oberen und unteren Greifervorrichtungen während aufeinanderfolgender Schläge alternierend in die erste Relativstellung überführt, während sie die Eingriffsmittel (13, 22; 14, 23) der beiden anderen Greifervorrichtungen in die zweite Relativstellung überführt.

19. Verfahren nach Anspruch 16,
**dadurch gekennzeichnet**, daß die Steuervorrichtung zum Doppelspulen-Weben eines Doppelpolgewebes gemäß einer Zweischuß-Webart unter Verwendung einer Dreigreifer-Webmaschine während jedes Schlags die Eingriffsmittel (13, 22; 14, 23) der mittleren Greifervorrichtung in die erste Relativstellung überführt, während sie die Eingriffsmittel (13, 22; 14, 23) der oberen und unteren Greifervorrichtungen während aufeinanderfolgender Schläge alternierend in die erste bzw. die zweite Relativstellung überführt.

## Claims

1. Gripper device for a weaving machine comprising a gripper rod with a gripper and a driving gear wheel (7; 8), installed on a driving shaft (2) of the weaving machine, to drive the gripper rod,
whereby the driving gear wheel (7; 8) is provided with first meshing means (13; 14) and the driving shaft (2) or a part (20'; 21') which may be driven by the driving shaft (2) provided with second meshing means (22; 23),
whereby the first and second meshing means (13; 22; 14; 23) are transferable to at least a first relative position and a second relative position,
whereby the driving gear wheel (7; 8) may be secured, with respect to the driving shaft (2), in the first relative position of the first and second meshing means (13; 22; 14; 23) and may be driven by same, while in the second relative position, with respect to the driving shaft (2), of the first and second meshing means (13; 22; 14; 23) it is freely rotatable and not driven by same,
whereby a control device is provided, that during weaving automatically transfers the first and second meshing means (13; 22; 13; 23) to their first, second relative position respectively.

2. Gripper device according to claim 1, **characterised in that** the control device functions accordingly to a predetermined engaging cycle being in phase with the weft cycle of the weaving machine.

3. Gripper device according to claim 1 or 2, **characterised in that** on the driving shaft (2) third meshing means (5; 6) have been secured which, in the first relative position of the first and second meshing means (13; 22; 14; 23), work together with the second meshing means (22; 23) in such a manner that the driving gear wheel (7; 8) is secured on the driving shaft (2) and may be driven by same.

4. Gripper device according to claim 3, **characterised in that** the second meshing means (22; 23) are provided on a sliding element (20'; 21'), slidable in the longitudinal direction of the driving shaft (2) into at least a first position and a second position,
whereby in the first position of the sliding element (20'; 21') the second and the third meshing means (22, 5; 23, 6) mesh together in order to transmit a rotation of the driving shaft (2) to the sliding element (20'; 21') and simultaneously the first and second meshing means (13, 22; 14, 23) mesh together in order to transmit the rotation of the sliding element (20'; 21') to the driving gear wheel (7; 8) and
whereby in the second position of the sliding element (20'; 21') the second meshing means (22; 23) mesh together either only with the first meshing means (13; 14) or only with the third meshing means (5; 6).

5. Gripper device according to claim 3, **characterised in that** the driving gear wheel (7; 8) comprises a central cylindrical part (11; 12), which on a bearing evolves symmetrically around the shaft (2) and is provided with an external toothing constituting the first meshing means (13; 14), and comprising a disc-shaped part (15; 16) as well which is arranged symmetrically around the cylindrical part (11; 12) and is provided with an external toothing for driving the gripper rod,
in that a external toothing (5; 6), constituting the third meshing means, is provided on a driving ring (3; 4) installed coaxially on the driving shaft (2) in a non-rotatable way and having the same external diameter as the cylindrical part (11; 12) and in that a internal toothing (22; 23), constituting the second meshing means, is provided on a central cylindrical opening of a sliding ring (20'; 21') constituting the sliding element,
whereby the internal toothing (22; 23) is proportioned in such a way that the cylindrical part (11; 12) of the driving gear wheel (7; 8) or/and the driving ring (3; 4) may be inserted into the central opening,
whereby in the first position of the sliding ring (20'; 21'), respectively the first relative position of the internal toothing (22; 23) and of the external toothing (13; 14) of the driving gear wheel (7; 8), the internal toothing (22; 23) meshes both with the external toothing (13; 14) of the driving gear wheel (7; 8) and with the external toothing (5; 6) of the driving ring (3; 4), and
whereby in the second position of the sliding ring ( 20'; 21'), respectively the second relative position of the internal toothing (22; 23) and of the external toothing (13; 14) of the driving gear wheel (7; 8), the internal toothing (22; 23) meshes either with the external toothing (13; 14) of the driving gear wheel (7; 8) or with the external toothing (5; 6) of the driving ring (3; 4).

6. Gripper device according to claim 1 to 5, **characterised in that** a locking device (24; 25) is provided, which maintains the driving gear wheel (7; 8) in the second relative position of the first and second meshing means (13; 22; 14; 23) in a predetermined locking position.

7. Gripper device according to claim 6, **characterised in that** the locking device (24; 25) is controlled by a control device.

8. Gripper device according to claim 6 or 7, **characterised in that** the locking device (24; 25) comprises at least a pin (24) slidable in the longitudinal direction of the driving shaft (2) by the control device and an opening (25) provided in the driving gear wheel (7; 8)
whereby the pin (24) engages with the opening (25) when the first and second meshing elements (13; 22; 14; 23) are in their second relative position, and
whereby the pin (24) is not engaged in the opening (25) when the first and second meshing elements (13; 22; 14; 23) are in their first relative position.

9. Gripper disposition for a weaving machine each time with a gripper disposition according to one of the preceding claims on each of the two sides of the weaving machine.

10. Gripper disposition for a weaving machine having at least two gripper dispositions, arranged one above the other according to one of the preceding claims.

11. Gripper disposition according to claim 10, **characterised in that** at least two driving gear wheels (7; 8) are installed, one above the other on a driving shaft (2).
whereby each time a driving ring (3; 4) is installed on the driving shaft (2) at a short distance from each driving gear wheel (7; 8), and
whereby the outer wall of a cylindrical part (11; 12) of each driving gear wheel (7; 8) is at a short distance from the outer wall of the driving ring (3; 4) and is in line with same, so that its toothings (5, 13; 6, 14) are likewise at a short distance from each other in line with each other,
and in that within range of each set comprising a driving ring (3; 4) and a driving gear wheel (7; 8), each time a sliding ring (20'; 21'), adjustable in two positions, is installed,
whereby in a first of the two positions, the driving ring (3; 4) and the driving gear wheel (7; 8) extend in a central opening of the sliding ring (20'; 21') and an internal toothing (22; 23) of the sliding ring (20'; 21') meshes both with the toothing (13; 14) of the driving gear wheel (7; 8) and with the toothing (5; 6) of the driving ring (3; 4), and
whereby in a second of the two positions only the driving gear wheel (7; 8) extends in the central opening of the sliding ring (20' 21') and the internal toothing (22; 23) of the sliding ring (20'; 21') meshes only with the toothing (13; 14) of the driving gear wheel (7; 8).

12. Gripper disposition according to claim 9 to 11, **characterised in that** each sliding ring (20'; 21') is connected to a part (20; 21) of a control device, which is moved in such manner, that before each beating-up, it moves the sliding ring (20'; 21') automatically into the first or into the second position, according to a cycle being in phase with the weft cycle, whereby part (20; 21) of the control device in its turn is moved by a device, driven or controlled by mechanical and/or electromechanical and/or pneumatic and/or electric and/or electronic means.

13. Gripper disposition according to claim 12, **characterised in that** the control device accordingly works to an adjustable cycle, whereby in order to adjust the cycle certain parts have to be adjusted or replaced by other parts and/or have to be programmed and/or a programmable device working together with the control device has to be programmed.

14. Gripper disposition according to claim 12 or 13, **characterised in that** the control device is a cam and rod mechanism.

15. Weaving machine with at least two gripper devices one arranged above the other according to one of the claims 1 to 8, respectively a gripper disposition according to one of the claims 9 to 14.

16. Method of weaving using a gripper weaving machine with at least two gripper devices one arranged above the other according to one of the claims 1 to 8, respectively a gripper disposition according to one of the claims 9 to 14, **characterised in that**, during weaving and before each weft insertion, the control device automatically moves the first and second meshing means (13, 22; 14, 23), in dependency on the fabric to be woven, into their first respectively their second relative position during an idling period of the gripper devices.

17. Method according to claim 16, **characterised in that** the control device for single bobbin weaving of a double pile fabric, using a gripper weaving machine with at least two gripper devices arranged one above the other then, when it has moved the meshing means (13, 22; 14, 23) of one of the gripper devices into the first relative position, each time the meshing means (13, 22; 14, 23) of the other gripper devices will move into the second relative position.

18. Method according to claim 16, **characterised in that** for single bobbin weaving of a double pile fabric according to a two weft weaving method using a three gripper weaving machine, the control device, to insert a weft thread, alternately moves the meshing means (13, 22; 14, 23) of the central, upper and lower gripper devices into the first relative position during consecutive beating-up, whereas it moves the two other gripper devices into the second relative position.

19. Method according to claim 16, **characterised in that** for double bobbin weaving of a double pile fabric according to a two weft weaving method using a three gripper weaving machine, the control device moves the meshing means (13, 22 ; 14, 23) of the central gripper device into the first relative position, during each beating-up, whereas during consecutive beating-up, it moves the upper and lower gripper devices into the first, second relative position respectively.

## Revendications

1. Dispositif de crochet pour un métier à tisser, comprenant une tige de crochet avec un crochet et une roue dentée de commande (7, 8) disposée sur un arbre de commande (2) du métier à tisser pour l'entraînement de la tige de crochet,
où la roue dentée (7, 8) est munie de premiers moyens d'engrènement (13, 14) et l'arbre de commande (2) ou une pièce (20', 21' qui peut être entraînée par l'arbre de commande (2) est muni de deuxièmes moyens d'engrènement (22, 23),
où les premiers et les deuxièmes moyens d'engrènement (13, 22; 14, 23) peuvent être disposés au moins dans une première position relative et dans une deuxième position relative,
où dans la première position relative des premiers et deuxièmes moyens d'engrènement (13, 22; 14, 23) la roue dentée de commande est fixée par rapport à l'arbre de commande (2) et peut être entraînée par celui-ci, pendant que dans la deuxième position relative des premiers et des deuxièmes moyens d'engrènement (13, 22; 14, 23) elle peut tourner librement par rapport à l'arbre de commande (2) et n'est pas entraînée par celui-ci,
où un dispositif de commande est prévu, qui durant le tissage, de manière automatique, peut disposer les premières et les deuxièmes moyens d'engrènement (13, 22; 14, 23) dans leur première, respectivement dans leur deuxième position relative.

2. Dispositif de crochet selon la revendication 1, **caractérisé en ce que** le dispositif de commande fonctionne selon un cycle de manoeuvre prédéterminé, se trouvant en phase avec le cycle de trame du métier à tisser.

3. Dispositif de crochet selon la revendication 1 ou 2, **caractérisé en ce que** de troisièmes moyens d'engrènement (5; 6) ont été fixés sur l'arbre de commande (2), qui, dans la première position relative des premiers et des deuxièmes moyens d'engrènement (13, 22; 14, 23) agissent ensemble avec les deuxièmes moyens d'engrènement (22, 23) de telle manière que la roue dentée de commande (7, 8) est fixée sur l'arbre de commande (2) et peut être entraînée par celui-ci.

4. Dispositif de crochet selon la revendication 3, **caractérisé en ce que** les deuxièmes moyens d'engrènement (22, 23) sont prévus sur un élément coulissant (20', 21') se déplaçant dans le sens de l'axe de l'arbre de commande (2) entre au moins une première position et une deuxième position,
où dans la première position de l'élément coulissant (20', 21') les deuxièmes et troisièmes moyens d'engrènement (22, 5; 23, 6) s'engrènent afin de transmettre une rotation de l'arbre de commande (2) à l'élément coulissant (20', 21') et simultanément les premiers et deuxièmes moyens d'engrènement (13, 22; 14, 23) s'engrènent afin de transmettre la rotation de l'élément coulissant (20', 21') à la roue dentée de commande (7, 8), et
où dans la deuxième position de l'élément coulissant (20', 21') les deuxièmes moyens d'engrènement (22, 23) soit ne s'engrènent qu'avec les premiers moyens d'engrènement (13, 14), soit ne s'engrènent qu'avec les troisièmes moyens d'engrènement (5, 6).

5. Dispositif de crochet selon la revendication 4, **caractérisé en ce que** la roue dentée de commande (7, 8) comprend une pièce cylindrique centrale (11; 12), qui sur un palier (9, 10) évolue symétriquement autour de l'arbre (2) est qui est munie d'une denture extérieure (13, 14) constituant les premiers moyens d'engrènement, ainsi qu'une pièce en forme d'une disque (15; 16), disposée symétriquement autour de la pièce cylindrique (11; 12) et munie d'une denture extérieure (17; 18) pour entraîner la tige de crochet,
en ce qu'une denture extérieure (5; 6) constituant les troisièmes moyens d'engrènement est prévue sur un anneau de commande (3, 4) qui est disposé de manière coaxiale et non pivotante sur l'arbre de commande (2) et qui présente le même diamètre extérieur que la pièce cylindrique (11; 12) et en ce qu'une denture intérieure (22; 23) constituant les deuxièmes moyens d'engrènement est prévue à une orifice annulaire central d'un anneau coulissant (20'; 21') constituant l'élément coulissant,
où la denture intérieure (22; 23) est dimensionnée de telle manière que la pièce cylindrique (11; 12) de la roue dentée de commande (7; 8) ou/et l'anneau de commande (3; 4) peut, respectivement peuvent être introduit(s) dans l'orifice central,
où dans la première position de l'anneau coulissant (20'; 21'), respectivement dans la première position relative de la denture intérieure (22; 23) et de la denture extérieure (13; 14) de la roue dentée de commande (7; 8), la denture intérieure (22; 23) s'engrène tant avec la denture extérieure (13; 14) de la roue dentée de commande (7; 8) qu'avec la denture extérieure (5; 6) de l'anneau de commande (3; 4), et
où dans la deuxième position de l'anneau coulissant (20'; 21'), respectivement dans la deuxième position relative de la denture intérieure (22; 23) et de la denture extérieure (13; 14) de la roue dentée de commande (7; 8), la denture intérieure (22; 23) s'engrène soit avec la denture extérieure (13; 14) de la roue dentée de commande (7; 8), soit avec la denture extérieure (5; 6) de l'anneau de commande (3; 4).

6. Dispositif de crochet selon l'une des revendications 1 à 5, **caractérisé en ce qu'**un dispositif de verrouillage (24; 25) est prévu qui maintient la roue dentée de commande (7; 8) dans la deuxième position relative des premiers et deuxièmes moyens d'engrènement (13, 22: 14, 23) dans une position de verrouillage prédéterminée.

7. Dispositif de crochet selon la revendication 6, **caractérisé en ce que** le dispositif de verrouillage (24; 25) est commandé par un dispositif de commande.

8. Dispositif de crochet selon la revendication 6 ou 7, **caractérisé en ce que** le dispositif de verrouillage (24; 25) comprend au moins une goupille (24) coulissant dans le sens longitudinal de l'arbre de commande (2) par le dispositif de commande et un orifice (25) prévu dans la roue dentée de commande (7; 8),
où la goupille (24) s'engage dans l'orifice (25) lorsque les premiers et les deuxièmes moyens d'engrènement (13, 22; 14, 23) se trouvent dans leur deuxième position relative, et
où la goupille (24) ne s'engage pas dans l'orifice (25), lorsque les premiers et les deuxièmes moyens d'engrènement (13, 22; 14, 23) se trouvent dans leur première position relative.

9. Disposition de crochet pour un métier à tisser avec chaque fois un dispositif de crochet selon l'une des revendications précédentes des deux côtés du métier à tisser.

10. Disposition de crochet pour un métier à tisser avec au moins deux dispositifs de crochet l'un disposé au-dessus de l'autre selon l'une des revendications précédentes.

11. Disposition de crochet selon la revendication 10, **caractérisée en ce que** au moins deux roues dentées de commande (7; 8) sont disposées l'une au-dessus de l'autre sur l'arbre de commande (2),
où chaque fois un anneau de commande (3; 4) est disposé sur l'arbre de commande (2) à faible distance de chacune des roues dentées de commande (7; 8), et
où la paroi extérieure d'une pièce cylindrique (11; 12) de chacune des roues dentées de commande (7; 8) présente une faible distance de la paroi extérieure de l'anneau de commande (3; 4) et est alignée par rapport à celle-ci, de manière à ce que leurs dentures (5, 13; 6, 14) aussi soient alignées à faible distance l'une de l'autre,
et en ce que dans la zone de chacun des jeux comprenant un anneau de commande (3; 4) et une roue dentée de commande (7; 8) chaque fois un anneau coulissant (20'; 21') est disposé réglable dans deux positions,
où dans une première des deux positions l'anneau (3; 4) et la roue dentée de commande (7; 8) s'étendent dans un orifice central de l'anneau coulissant (20'; 21') et une denture intérieure (22; 23) de l'anneau coulissant (20'; 21') s'engrène tant avec la denture (13; 14) de la roue dentée de commande qu'avec la denture (5; 6) de l'anneau de commande (3; 4), et
où dans une deuxième des deux positions la roue dentée de commande (7; 8) seule s'étend dans l'orifice central de l'anneau coulissant (20'; 21') et la denture intérieure (22; 23) de l'anneau coulissant (20'; 21') ne s'engrène qu'avec la denture (13; 14) de la roue dentée de commande (7; 8).

12. Disposition de crochet selon l'une des revendications 9 à 11, **caractérisée en ce que** chacun des anneaux de commande (20'; 21') est relié à une pièce (20; 21) d'un dispositif de commande, qui est déplacée de telle manière qu'avant chaque battage elle dispose l'anneau coulissant (20'; 21') dans la première et dans la deuxième position selon un cycle automatique se trouvant en phase avec le cycle de trame, où la pièce (20; 21) du dispositif de commande est déplacée à son tour par un dispositif, qui est entraîné ou commandé par des moyens mécaniques et/ou électromécaniques et/ou pneumatiques et/ou électriques et/ou électroniques.

13. Disposition de crochet selon la revendication 12, **caractérisée en ce que** le dispositif de commande fonctionne selon un cycle réglable, où pour le réglage du cycle certaines pièces doivent être réglées ou remplacées par d'autres et/ou programmées et/ou un dispositif programmable agissant ensemble avec le dispositif de commande doit être programmé.

14. Disposition de crochet selon la revendication 12 ou 13, **caractérisée en ce que** le dispositif de commande est un mécanisme à cames et à tiges.

15. Métier à tisser avec au moins deux dispositifs de crochet disposés l'un au-dessus de l'autre selon l'une des revendications 1 à 8, respectivement une disposition de crochet selon l'une des revendications 9 à 14.

16. Méthode de tissage en utilisant un métier à tisser à crochet avec au moins deux dispositifs de crochet l'un disposé au-dessus de l'autre selon l'une des revendications 1 à 8, respectivement une disposition de crochet selon l'une des revendications 9 à 14, **caractérisée en ce que** durant le tissage, en dépendance du tissu à tisser et durant une durée de marche à vide des dispositifs de crochet le dispositif de commande transfère les premiers et les deuxièmes moyens d'engrènement de manière automatique dans leur première, respectivement dans leur deuxième position relative avant chaque insertion de trame.

17. Méthode selon la revendication 16, **caractérisée en ce que** le dispositif de commande pour le tissage à une seule bobine d'un tissu à double poil en utilisant un métier à tisser à crochet avec au moins deux dispositifs de crochet, l'un, disposé au-dessus de l'autre alors, lorsqu'il transfère les moyens d'engrènement (13, 22; 14, 23) de l'un des dispositifs de crochet dans la première position relative, il transfère les moyens d'engrènement (13, 22; 14, 23) des autres dispositifs de crochet dans la deuxième position relative.

18. Méthode selon la revendication 16, **caractérisée en ce que** le dispositif de commande pour le tissage à une seule bobine d'un tissu à double poil, selon une méthode de tissage à deux trames, en utilisant un métier à tisser à trois crochets transfère de manière alternante les moyens d'engrènement (13, 22; 14, 23) des dispositifs de crochet du milieu, supérieur et inférieur dans la première position relative avant l'insertion d'un fil de trame, durant des battages consécutifs, pendant qu'il transfère les moyens d'engrènement (13, 22; 14, 23) des deux autres dispositifs de crochet dans la deuxième position relative.

19. Méthode selon la revendication 16, **caractérisée en ce que** le dispositif de commande pour le tissage à double bobine d'un tissu à double poil, selon une méthode de tissage à deux trames, en utilisant un métier à tisser à trois crochets transfère de manière alternante les moyens d'engrènement (13, 22; 14, 23) du dispositif de crochet du milieu dans une première position relative, pendant que durant des battages consécutifs il transfère de manière alternante les moyens d'engrènement (13, 22; 14, 23) des dispositifs de crochet supérieur et inférieur dans la première, respectivement dans la deuxième position relative avant l'insertion d'un fil de trame, durant des battages consécutifs, pendant qu'il transfère les moyens d'engrènement (13, 22; 14, 23) des deux autres dispositifs de crochet dans la deuxième position relative.
